# EUROPÄISCHE PATENTSCHRIFT

(11) **EP 2 517 349 B1**
(45) Veröffentlichungstag und Bekanntmachung des Hinweises auf die Patenterteilung: **26.03.2014**
(21) Anmeldenummer: 10796054.4
(22) Anmeldetag: 22.12.2010
(51) Int. Cl.: H02P 25/10, H02P 3/22

(54) **BREMSEINRICHTUNG FÜR EINEN UNIVERSALMOTOR**
BRAKING DEVICE FOR A UNIVERSAL MOTOR
DISPOSITIF DE FREINAGE POUR UN MOTEUR UNIVERSEL

(30) Priorität: 23.12.2009 DE 102009060139; 11.01.2010 DE 102010004311
(43) Veröffentlichungstag der Anmeldung: 31.10.2012
(73) Patentinhaber: Robert Bosch GmbH, 70442 Stuttgart (DE)
(72) Erfinder: ROTTMERHUSEN, Hans, Hermann, 25782 Tellingstedt (DE)
(86) Internationale Anmeldenummer: PCT/EP2010/070457
(87) Internationale Veröffentlichungsnummer: WO 2011/076827

(56) Entgegenhaltungen:
- EP-A2- 1 385 261
- DE-C1- 19 932 742
- US-A- 3 764 822

## Beschreibung

Die Erfindung bezieht sich auf eine Bremseinrichtung für einen Universalmotor gemäß dem Patentanspruch 1 und ein Verfahren zum Bremsen gemäß Patentanspruch 13.

Elektrodynamische Bremseinrichtungen sind in unterschiedlichen Auslegungen bekannt.

US 6 236 177 B1 beschreibt eine Brems- und Steuerschaltung für einen Universalmotor, bei der einerseits ein erstes Schaltmittel (Triac) zum Betreiben des Motors in Reihe mit dem Motor geschaltet ist, und andererseits ein zweites Schaltmittel (Triac) zum Bremsen des Motors dem Anker parallel geschaltet ist, wobei der Anker zwischen der Feldwicklung angeordnet ist. Während des Motorbetriebes ist das zweite Schaltmittel parallel zum Anker nicht leitend, und während des Bremsbetriebes wird sowohl das erste Schaltmittel als auch das zweite Schaltmittel angesteuert.

EP 0 578 366 A2 beschreibt eine Bremseinrichtung für Universalmotoren, bei der Schaltmittel zum Einsatz kommen, um die Feldwicklung und die Läuferwicklung mit dem Netz zu verbinden und/oder zu trennen, wobei die Schaltmittel Positionen aufweisen, bei der in der ersten Position die Läuferwicklung und die Feldwicklung mit dem Netz verbunden sind, und in der zweiten Position die Läuferwicklung kurzgeschlossen ist und das Netz nur mit der Feldwicklung verbunden ist.

DE 103 17 636 A1 beschreibt eine Bremseinrichtung für einen Universalmotor, bei der zum Kurzschließen der Ankerwicklung während des Bremsbetriebes ein Kurzschlussschalter (Triac) vorgesehen ist, wobei der Kurzschlussschalter zur Ermittlung seines Schaltzustandes einen Steuereingang aufweist, und der Steuereingang des Kurzschlussschalters ist mit einer Steuereinheit verbunden, um während des Bremsbetriebes zur Vermeidung von Bürstenfeuer eine Phasenanschnittsteuerung des Kurzschlussschalters durchzuführen.

Aus DE 199 32 742 C1 ist eine Netzbremseinrichtung für ein Elektrohandwerkzeug bekannt. Dabei sind ein Stromwendermotor und eine Schaltungsanordnung mit einem zwischenMotor- und Bremsbetrieb umschaltenden zweipoligen Umschalter und einem mit dem Stromwendermotor in Reihe geschalteten elektronischen Leistungsschalter und mit einer dem Triac zugeordneten Steuerelektronik vorgeschlagen, wobei zur sicheren Erkennung und Einleitung des Netzbremsvorgangs die Steuerelektronik mit Einrichtungen versehen ist, die zur Erkennung des Motorbetriebs und des Netzbremsbetriebs dienen. Die Netzbremseinrichtung findet im besonderen bei mit gefährlichen Werkzeugen bestückten Elektrowerkzeugen wie Winkelschleifer, Handkreissägen oder dergleichen Anwendung.

Aus US 3,764,822 ist eine Anordnung zum Antreiben einer Waschmaschine bekannt. Dazu ist ein Heizwiderstand in Serie zu einem Motor geschaltet. Zudem wird der Motor über einen steuerbaren Schalter mit einer Netzspannung verbunden. Weiterhin ist parallel zum Motor und dem steuerbaren Schalter ein weiterer steuerbarer Schalter vorgesehen.

Aus EP 1 385 261 A2 ist ein gebremster Elektromotor bekannt, der als Reihenschlussmotor oder Asynchronmotor ausgebildet sein kann. Bei der Ausführung als Reihenschlussmotor wird dieser im Motorbetrieb als herkömmlicher Elektromotor betrieben, wobei Mittel zum Umschalten in den Bremsbetrieb eine Überbrückung des Ankers und eine Fremderregung mindestens einer Feldwicklung durch die Versorgungsspannung erlauben, so dass der Motor zum Bremsen als fremderregter Gleichstromgenerator betrieben wird. Die Anordnung weist einen ersten Schalter auf, der eine erste Feldwicklung mit einem Netzanschluss verbindet. Die erste Feldwicklung ist an den Anker angeschlossen. Zudem ist der Anker über eine zweite Feldwicklung und einen weiteren Schalter mit einem zweiten Netzanschluss verbunden. Weiterhin ist ein Ausgang der ersten Feldwicklung mit einem dritten Schalter mit dem zweiten Netzanschluss verbunden. Zudem ist ein weiterer Schalter vorgesehen, der parallel zum Anker angeordnet wird.

Der Erfindung liegt die Aufgabe zugrunde, eine effektive und kostengünstige elektrodynamische Bremseinrichtung und ein Verfahren zum Bremsen für einen Universalmotor zu schaffen, mit der eine gute Bremsung bei vorzugsweise reduziertem Bürstenfeuer und vorzugsweise geringem Bürstenverschleiß erzielt werden kann.

Die Aufgabe der Erfindung wird durch die Merkmale der Patentanspruchs 1 und 13 gelöst. Weitere Ausgestaltungen der Erfindung sind in den Unteransprüchen und der Beschreibung dargelegt.

Ein Vorteil der Erfindung besteht darin, dass eine elektrodynamische Bremseinrichtung für einen Universalmotor mit einer Einrichtung zum Umschalten von einem Motorbetrieb in einen Bremsbetrieb vorgesehen ist, wobei während des Bremsbetriebes eine Feldwicklung des Universalmotors über einen ersten und einen zweiten Schalter aus einem Netz gespeist ist, und ein Anker des Universalmotors über den zweiten Schalter kurzgeschlossen ist, und mit einer Steuerelektronik, die ausgebildet ist, um während des Bremsbetriebes vorzugsweise innerhalb einer jeden Halbwelle der Netzspannung kurzzeitig einen Motorbetrieb und nachfolgend einen Bremsbetrieb vorzugeben, wobei dem ersten Schalter mit einem vorbestimmten Zeitverzug der zweite Schalter leitend geschaltet ist. Auf diese Weise kann eine verbesserte Bremsung des Universalmotors durchgeführt werden.

In einer Weiterbildung ist der Zeitverzug für eine Ansteuerung des zweiten Schalters derart ausgelegt ist, dass der vorgelegte Motorbetrieb innerhalb einer Halbwelle eine Reduzierung eines Bürstenfeuers am Kollektor des Universalmotors bewirkt.

In einer Weiterbildung der Bremseinrichtung liegt der Zeitverzug zwischen 1 µs und 1 ms. Dieser Wertebereich hat sich als vorteilhaft erwiesen. Abhängig von der Realisierung können auch kürzere Zeiten oder längere Zeiten verwendet werden.

In einer Weiterbildung der Bremseinrichtung ist der Zeitverzug für die Ansteuerung des zweiten Schalters nach dem ersten Schalter während einer gesamten Abbremsung konstant.

In einer Weiterbildung der Bremseinrichtung hängt der Zeitverzug für die Ansteuerung des zweiten Schalters nach dem ersten Schalter während des Bremsbetriebes von Parametern des Universalmotors und der Netzspannung ab. Dadurch kann eine genauer angepasste Bremsung erreicht werden. Insbesondere kann die Bremszeit und die Belastung des Kollektors, insbesondere der Bürsten optimiert werden.

In einer Weiterbildung der Bremseinrichtung hängt der Zeitverzug für die Ansteuerung des zweiten Schalters nach dem ersten Schalter während des Bremsbetriebes von der Netzspannung zum Zeitpunkt des Schaltens des ersten Schalters und/oder von der Drehzahl des Universalmotors und/oder von der Temperatur des Universalmotors ab. Diese Weiterbildung ermöglicht eine noch bessere Anpassung des Bremsvorganges beispielsweise zur Optimierung der Bremszeit und/oder der Reduzierung der Belastung des Kollektors insbesondere der Bürsten.

In einer Weiterbildung der Bremseinrichtung weist der Zeitverzug für die Ansteuerung des zweiten Schalters am Anfang des Bremsbetriebes einen Wert auf, der im weiteren Verlauf des Bremsbetriebes abnimmt und insbesondere am Ende des Bremsbetriebes aufgehoben ist oder insbesondere der zweite Schalter vor dem ersten Schalter geschlossen wird.

In einer Weiterbildung der Bremseinrichtung ist der Zeitverzug für die Ansteuerung des zweiten Schalters derart gewählt, dass eine Stromwendung unter Bürsten am Kollektor des Universalmotors während der Einleitung des Bremsbetriebes innerhalb wenigstens eines Teils der Halbwellen von einer ablaufenden Kante der Bürsten hin zu einer auflaufenden Kante verlegt ist, wobei der Anker während des Bremsbetriebes im Wesentlichen nicht angetrieben d.h. beschleunigt wird.

In einer Weiterbildung der Bremseinrichtung ist die Steuerelektronik derart ausgebildet, um den Bremsbetrieb ungeregelt oder geregelt durchzuführen.

In einer Weiterbildung der Bremseinrichtung greift die Steuerelektronik auf eine Tabelle zu, in der Phasenanschnittwinkel zur Ansteuerung des ersten und/oder des zweiten Schalters abgelegt sind, wobei vorzugsweise wenigstens eine Phasenanschnittwinkelkurve abgelegt ist.

In einer Weiterbildung der Bremseinrichtung ist während des Bremsbetriebes der zweite Schalter parallel zum Anker und in Reihe mit der Feldwicklung und in Reihe mit dem ersten Schalter geschaltet, wobei vorzugsweise dem zweiten Schalter ein Umschaltglied vorzugsweise mit einem Erkennungskontakt vorgeschaltet ist.

In einer Weiterbildung der Bremseinrichtung ist das Umschaltglied als Signalgeberschaltglied der Steuerelektronik zugeordnet und der erste Schalter ist in einem ersten Netzanschluss und ein dritter Schalter ist in einem zweiten Netzanschluss angeordnet.

Weiterhin betrifft die Erfindung ein Verfahren zum Bremsen eines Universalmotors mit einer Einrichtung zum Umschalten des Universalmotors von einem Motorbetrieb in einen Bremsbetrieb, wobei während des Bremsbetriebes eine Feldwicklung des Universalmotors über einen ersten und einen zweiten Schalter aus einer Netzspannung gespeist wird, und ein Anker des Universalmotors über den zweiten Schalter kurzgeschlossen ist, wobei während des Bremsbetriebes vorzugsweise innerhalb einer jeden Halbwelle der Netzspannung kurzzeitig ein Motorbetrieb des Universalmotors durch Schalten des ersten Schalters eingestellt wird, und wobei mit einem Zeitverzug nachfolgend ein Bremsbetrieb durch Schalten des zweiten Schalters eingestellt wird.

In einer Weiterbildung des Verfahrens liegt der Zeitverzug zwischen dem Schalten des ersten Schalters für den Motorbetrieb und das Schalten des zweiten Schalters für den Bremsbetrieb zwischen 1 µs und 1 ms. Dieser Wertebereich hat sich als vorteilhaft erwiesen. Abhängig von der Realisierung können auch kürzere Zeiten oder längere Zeiten verwendet werden.

In einer Weiterbildung der Bremseinrichtung ist der Zeitverzug für die Ansteuerung des zweiten Schalters nach dem ersten Schalter während des Bremsbetriebes abhängig von der Netzspannung zum Zeitpunkt des Schaltens des ersten Schalters und/oder abhängig von einer von der Drehzahl des Universalmotors und/oder abhängig von der Temperatur des Universalmotors.

Weitere Vorteile der Erfindung werden darin gesehen, dass ohne Umpolung einer Feldwicklung oder eines Ankers eine sanfte Schnellbremsung des Universalmotors bei einer guten Bürstenstandzeit erzielt wird. Der Anker ist während des Bremsbetriebes kurzgeschlossen, und die Feldwicklung ist durch eine spezielle Ansteuerung während des Bremsbetriebes aus einer Netzspannung erregt. Eine sanfte Schnellbremsung wird vorzugsweise über eine einfache Hardware und eine spezielle Software erreicht, wodurch die elektrodynamische Bremseinrichtung kostengünstig ist.

Das Bürstenfeuer am Kollektor des Ankers kann vorzugsweise während des Bremsbetriebes im besonderen dadurch reduziert werden, dass ein Controller einer Steuerelektronik ein Programm beinhaltet, womit ein schädlicher Aufbau eines erhöhten Lichtbogens am Kollektor reduziert, insbesondere dadurch unterbunden wird, dass innerhalb einer Halbwelle einer Netzspannung zuerst ein Motorbetrieb und anschließend der Bremsbetrieb erfolgt.

Des Weiteren sind vorzugsweise Einrichtungen für ein sicheres Erkennen des Motorbetriebes und des Bremsbetriebes, sowie eine Überwachung für die Betriebssicherheit der Steuerelektronik und der Schaltungsanordnung vorhanden.

Die Erfindung wird nachstehend anhand der Zeichnung näher erläutert.

Dabei zeigt:
- Fig. 1 und 2: Schaltungsanordnungen der elektrodynamischen Bremseinrichtung für einen Universalmotor,
- Fig. 3 bis 5: Aufzeichnungen über Stromverläufe während eines Motorbetriebes und während eines Bremsbetriebes und
- Fig. 6: einen Bremsbetrieb während einer Halbwelle der Netzspannung.

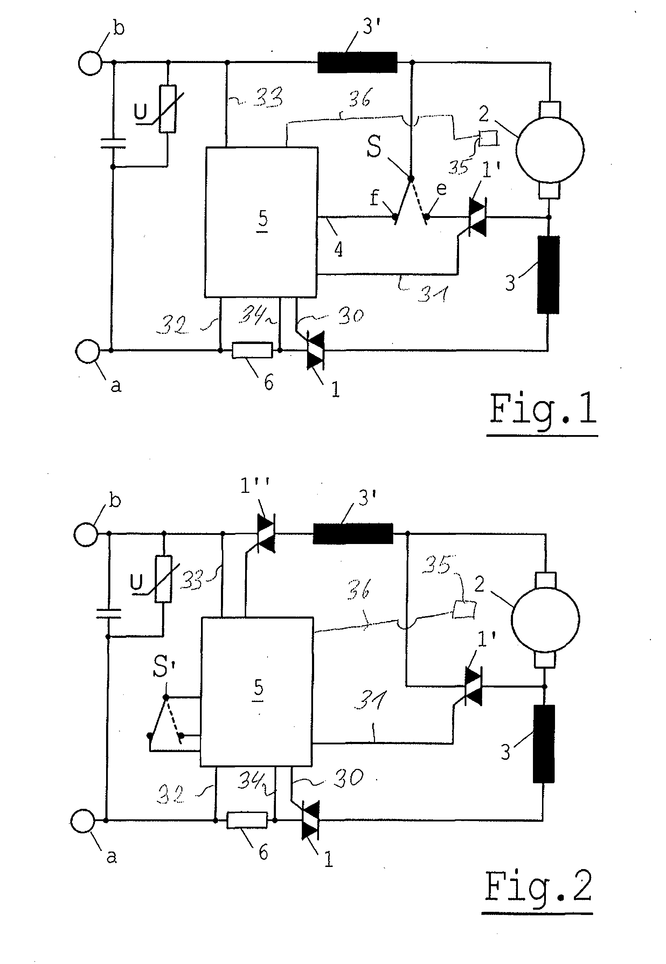

Fig. 1 zeigt eine Schaltungsanordnung, bei der ein erster Triac 1 in einem ersten Netzanschluss a angeordnet, und in Reihe mit dem Universalmotor geschaltet ist, und ein zweiter Triac 1' ist dem Anker 2 parallel geschaltet, wobei dem zweiten Triac 1' ein Umschaltglied S vorgeschaltet ist und in Reihe mit dem zweiten Triac liegt. Der Anker 2 ist zwischen zwei Feldwicklungen 3, 3' geschaltet. Das Umschaltglied S ist an der einen Seite des Ankers 2 angeschlossen. Der zweite Triac 1' ist mit der einen Seite an einen Bremsbetriebskontakt e des Umschaltgliedes S, und mit der anderen Seite an der anderen Seite des Ankers angeschlossen. Ein Erkennungskontakt f des Umschaltgliedes S ist über eine Leitung 4 mit einer Steuerelektronik 5 verbunden. Die Steuerelektronik 5 ist über eine erste Steuerleitung 30 mit dem ersten Triac 1 und über eine zweite Steuerleitung 31 mit dem zweiten Triac 1' verbunden. Weiterhin ist die Steuerelektronik 5 über eine erste Versorgungsleitung 32 mit dem ersten Netzanschluss und über eine zweite Versorgungsleitung 33 mit dem zweiten Netzanschluss b verbunden. Zudem ist eine Signalleitung 34 von der Steuerelektronik 5 zur Verbindungsleitung zwischen dem Shunt 6 und dem ersten Triac 1 geführt. Schließlich können weitere Sensoren 35, insbesondere ein Drehzahlmesser oder ein Temperatursensor für den Universalmotor 1 vorgesehen sein, die über eine weitere Signalleitung 36 mit der Steuerelektronik 5 verbunden sind.

Während des Motorbetriebes ist das Umschaltglied S zum Erkennungskontakt f geschlossen, und der Motorbetrieb erfolgt über den ersten Triac 1. Während des Bremsbetriebes ist das Umschaltglied S zum Bremsbetriebskontakt e geschlossen, und der Bremsbetrieb erfolgt sowohl über den ersten Triac 1 als auch über den zweiten Triac 1'.

Auf das Umschaltglied S kann verzichtet werden. Weiterhin kann ein Signalgeberschaltglied der Steuerelektronik 5 zugeordnet sein. In dieser Ausführungsform ist der zweite Triac 1' mit den zwei Anschlüssen des Ankers 2 verbunden. Vorzugsweise besitzt ein solcher Signalschalter zum sicheren Erkennen des Motorbetriebes und des Bremsbetriebes drei Anschlüsse.

Zur Verbesserung des Brennvorgangs und insbesondere zur Reduzierung des Bürstenfeuers während des Bremsbetriebes wird der erste und der zweite Triac 1,1' speziell mit einem Programm eines Controllers der Steuerelektronik 5 angesteuert, wobei das Programm des Controllers so ausgelegt ist, dass vorzugsweise während jeder Halbwelle der Netzspannung zuerst der erste Triac 1 angesteuert wird, d.h. leitend geschalten wird, womit der Motorbetrieb aktiviert ist. Hier wird zwar der Begriff Motorbetrieb verwendet, da die Spannungsversorgung entsprechend gewählt ist, wobei jedoch vorzugsweise die Netzspannung und insbesondere die Zeitdauer so kurz gewählt sind, dass keine wesentliche, vorzugsweise keine Beschleunigung des Universalmotors auftritt. Dadurch wird durch eine vorgegebene Bürstenstellung eine optimale Kommutierung erreicht. Nach einem vorbestimmten Zeitverzug wird der zweite Triac 1' angesteuert, d.h. leitend geschaltet, so dass der erste Triac 1 und der zweite Triac 1' leitend sind. Dadurch ist der Anker 2 über den zweiten Triac 1' kurzgeschlossen und der Strom des Netzes fließt direkt über die Feldwicklung 3,3' und über den ersten und den zweiten Triac 1,1'. Der induzierte Strom des kurzgeschlossenen Ankers 2 fließt mit über den zweiten Triac 1'. Durch die Umkehrung des Feldes am Anker während des Bremsbetriebes ist durch die vorgegebene Bürstenstellung eine unzureichende Kommutierung am Anker vorhanden.

Da vorzugsweise jeweils innerhalb einer jeden Halbwelle während des Bremsbetriebes vor dem tatsächlichen Bremsbetrieb kurzzeitig noch ein Motorbetrieb vorhanden ist, wird das Bürstenfeuer während der Kurzschließung des Ankers unterdrückt und das Bürstenfeuer und somit der Bürstenverschleiß werden reduziert.

Der Zeitverzug für die Ansteuerung des zweiten Triacs 1' ist so bemessen, dass der Motorbetrieb vorzugsweise in jeder Halbwelle während des Bremsbetriebes für die Unterdrückung des Bürstenfeuers am Kollektor des Universalmotors ausreichend ist, aber für einen nennenswerten Antrieb des Ankers 2 nicht ausreichend ist.

Der Zeitverzug für die Ansteuerung des zweiten Triacs 1' während einer jeden Halbwelle ist vorzugsweise in der gesamten Bremszeit d.h. einem Abbremsvorgang des Universalmotors 1 konstant. Der Zeitverzug kann aber auch während des Bremsbetriebes variabel sein. Es kann am Anfang des Bremsbetriebes ein entsprechend hoher Zeitverzug vorhanden sein, wobei der Zeitverzug im weiteren Verlauf des Bremsbetriebes vorzugsweise kontinuierlich beispielsweise von Halbwelle zu Halbwelle abnimmt und am Ende der Bremszeit der zweite Triac 1' unmittelbar nach dem ersten Triac 1, oder zeitgleich, oder sogar vor dem ersten Triac 1 gezündet wird.

Der Universalmotor kann auch beidseitig vom Netz trennbar sein.

Fig. 2 zeigt eine Lösung, bei der ein dritter Triac 1" in dem zweiten Netzanschluss b angeordnet ist. Der erste und der dritte Triac 1,1" werden stets zeitgleich angesteuert. Hier ist der Steuerelektronik 5 ein Signalschalter S' zur Bestimmung des Motorbetriebes und des Bremsbetriebes zugeordnet.

Der zweite Triac 1' der dem Anker 2 parallel geschaltet ist, kann über einen Shunt 6 überwacht werden. Wird nach dem Anschalten des Universalmotors ein zu hoher Stromfluß ermittelt, ist voraussichtlich der zweite Triac 1' leitend, und der Universalmotor wird sofort vom Netz getrennt. In einem solchen Fall kann eine Warnleuchte blinken.

In den beschriebenen Ausführungsbeispielen wurden Triacs als Halbleiterschalter verwendet. Abhängig von der gewählten Ausführungsform können auch andere Schalter, insbesondere andere Halbleiterschalter verwendet werden, um die Spannungs- und Stromversorgung des Universalmotors für den Motorbetrieb und den Bremsbetrieb zu steuern.

Die zuvor beschriebene elektrodynamische Bremseinrichtung ist besonders gekennzeichnet durch eine gute Stromwendung unter den Bürsten am Kollektor des Universalmotors während des Bremsbetriebes. Dieser besondere Vorteil wird dadurch erzielt, dass der parallel zum Anker 2 geschaltete Triac 1' mit einem speziellen Zeitverzug zu dem mit dem Universalmotor in Reihe geschalteten ersten Triac 1 angesteuert wird.

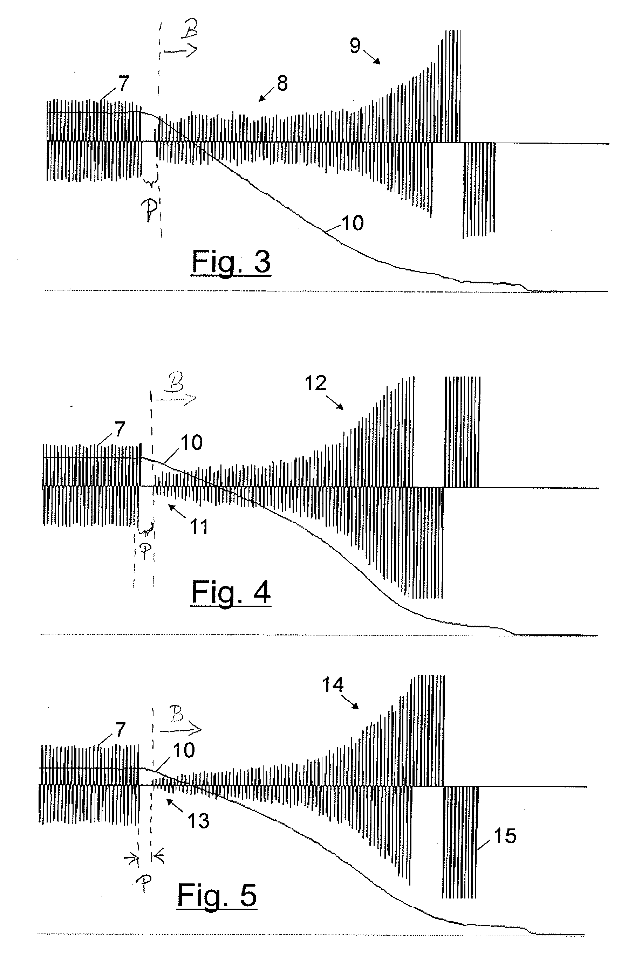

Anhand der Fig. 3 bis 5 soll das zuvor beschriebene Verfahren näher erläutert werden, wobei vorzugsweise stets die gleiche Tabelle des Programms des Controllers für eine Phasenanschnittwinkelkurve während des Bremsbetriebes zur Ansteuerung der Triacs 1,1' zur Anwendung kommt.

Fig. 3 zeigt eine Aufzeichnung über einen Stromverlauf während eines Bremsbetriebes. Ein Leerlaufbetrieb des Universalmotors ist durch angeschnittene Vollwellen 7 eines Netzes dargestellt. Nach einer kurzen Pause P beginnt sofort der Bremsbetrieb B, wobei der erste und der zweite Triac 1,1' zeitgleich mit einem Programm des Controllers der Steuerelektronik 5 angesteuert sind. In einem ersten zweidrittel Bereich 8 einer Bremszeit ist die Stromaufnahme der Feldwicklung 3 annähernd gleich. Dieses hat zur Folge, dass am Anfang des Bremsbetriebes die Bürsten stark feuern, wodurch die Bürsten abbrennen und der Kollektor beschädigt wird. In einem letzten drittel Bereich 9 der Bremszeit steigt die Stromaufnahme zu gering an.

Aus der aufgezeichneten Linie des Drehzahlverlaufs 10 geht hervor, dass am Anfang des Bremsbetriebes die Bremsung zu stark ist und am Ende zu schwach ist.

Fig. 4 zeigt eine Aufzeichnung über einen Stromverlauf während des Bremsbetriebes B, bei der der zweite Triac 1' mit einem entsprechenden Zeitverzug nach dem ersten Triac 1 angesteuert ist, so dass vorzugsweise in jeder Halbwelle des Netzes zuerst ein Motorbetrieb, und danach ein Bremsbetrieb erfolgt.

Am Anfang 11 der Bremszeit ist die Stromaufnahme der Feldwicklung 3 in Bezug zu der Fig. 3 deutlich niedriger, wobei die Stromaufnahme im weiteren Verlauf leicht ansteigt und im letzten Drittel 12 der Bremszeit stark ansteigt.

Mit einem Zeitverzug der Ansteuerung des zweiten Triacs 1' ist eine Kommutierung am Kollektor des Universalmotors deutlich verbessert und der Abbrand der Bürsten schon beachtlich reduziert. Aus dem Drehzahlverlauf 10 ist zu ersehen, dass am Anfang des Bremsbetriebes die Bremsung schwächer ist und danach verstärkt ist.

Fig. 5 zeigt eine Aufzeichnung über einen Stromverlauf während des Bremsbetriebes, bei der der zweite Triac 1' mit einem optimalen Zeitverzug nach dem ersten Triac 1 angesteuert ist, so dass vorzugsweise in jeder Halbwelle des Netzes zuerst ein ausreichender Motorbetrieb für eine gute Stromwendung unter den Bürsten vorhanden ist, und im Anschluß der Bremsbetrieb erfolgt, wobei der Zeitverzug so gewählt ist, dass die Stromwendung unter den Bürsten während des Überganges vom Motorbetrieb in den Bremsbetrieb von der ablaufenden Kante der Bürsten hin zu der auflaufenden Kante verlegt ist, und hierdurch das Bürstenfeuer erheblich gesenkt ist, und der Zeitverzug auch so gewählt ist, dass der Anker während des Bremsbetriebes im Prinzip nicht angetrieben wird.

Bei der Fig. 5 ist am Anfang 13 der Bremszeit die Stromaufnahme der Feldwicklung 3 noch niedriger wie bei der Fig. 4, und im weiteren Verlauf steigt die Stromaufnahme kontinuierlich mäßig an, und zum letzten Drittel 14 hin steigt die Stromaufnahme zur Beschleunigung des Bremsverlaufs entsprechend hoch an. Zum Ende der Bremszeit wird die Feldwicklung mit Halbwellenpaketen 15 beaufschlagt.

Aus dem Drehzahlverlauf 10 geht hervor, dass eine optimale Bremskurve erzielt ist. Am Anfang des Bremsbetriebes wird die Bremsung sanft eingeleitet und fortwährend überproportional verstärkt, und am Ende des Bremsbetriebes läuft die Bremsung sanft aus.

Durch den Zeitverzug der Ansteuerung des zweiten Triacs 1' kann ein ungeregelter Bremsbetrieb eingesetzt werden. Somit ist eine fest eingestellte Phasenanschnittwinkelkurve mittels einer Tabelle des Programms des Controllers zu verwenden, da bei einem geregelten Bremsbetrieb ein unruhiger Bremsstromverlauf vorhanden sein könnte, und hierdurch ein Feuern der Bürsten verstärkt werden könnte.

Damit die Stromsprünge während des Bremsbetriebes gering gehalten werden können, und hiermit das Bürstenfeuer reduziert wird, können die Phasenanschnittwinkelschritte beispielsweise von Halbwelle zu Halbwelle der Phasenanschnittwinkelkurve vorzugsweise weniger wie 1 % betragen.

Bei kürzer werdenden Bürsten kann der Andruck der Bürsten auf den Kollektor für eine vorgegebene Bremszeit nicht mehr ausreichend sein, da die Spannung des kurzgeschlossenen Ankers hierfür nicht mehr ausreichend ist.

Damit die Bremszeit wieder eingehalten werden kann, schaltet das Programm des Controllers der Steuerelektronik 5 auf eine weitere Tabelle für die Phasenanschnittwinkelkurve um, bei der der Anschnitt der Halbwellen der Wechselspannung des Netzes geringer ist.

Eine ausreichende Bremswirkung kann einerseits über einen Shunt ermittelt, oder über eine Drehzahlerkennung erfaßt werden.

Die elektrodynamische Bremseinrichtung kann alternativ auch mit Gleichstrom betrieben werden.

Vorzugsweise weist das Programm des Controllers der Steuerelektronik weitere Tabellen für Phasenanschnittwinkelkurven auf, die jeweils einen geringeren Anschnitt, der Halbwellen des Netzes aufweisen.

Weiterhin ist vorzugsweise eine Bremskurve derart ausgelegt, dass am Anfang des Bremsbetriebes eine Bremsung sanft eingeleitet wird, und fortwährend überproportional verstärkt ist und am Ende sanft ausläuft.

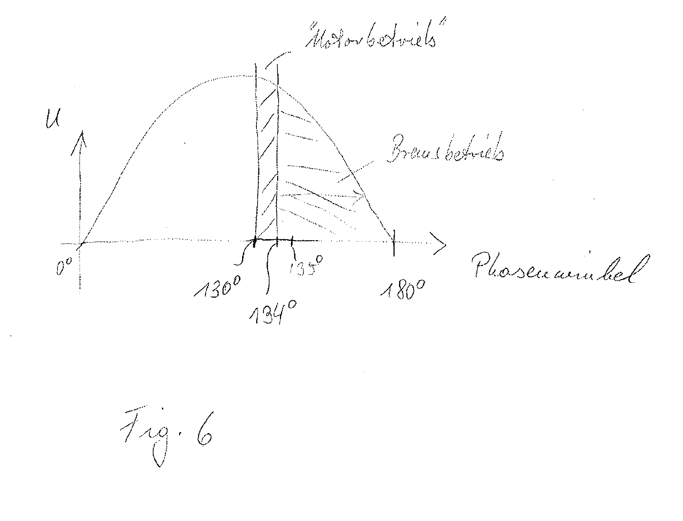

Figur 6 zeigt in einer schematischen Darstellung eine Halbwelle der Netzspannung über den Phasenwinkel der Netzspannung des Netzes a, b bei einem Bremsbetrieb des Universalmotors. Die Grundidee der Erfindung besteht darin, mit Hilfe der Netzspannung den Universalmotor schonend abzubremsen. Dabei wird zuerst während des Bremsbetriebes kurzzeitig ein Motorbetrieb durchgeführt und anschließend in den Bremsbetrieb umgeschalten. In dem dargestellten Ausführungsbeispiel wird beim Phasenwinkel von 130° der erste Schalter 1 leitend geschalten, wobei der zweite Schalter 1 noch sperrend ist. Anschließend wird bei einem folgenden Phasenwinkel von 134° auch der zweite Schalter 1' leitend geschaltet, sodass eine tatsächliche Bremswirkung auf den Universalmotor ausgeführt. In dem Zeitraum zwischen dem Phasenwinkel von 130° und 134° wird kurzzeitig ein Motorbetrieb durchgeführt. Nach dem Phasenwinkel von 134° wird ein reiner Bremsbetrieb durchgeführt, der beispielsweise bei 180° Phasenwinkel endet.

Abhängig von der gewählten Ausführungsform variiert der Einschaltwinkel und damit der Einschaltzeitpunkt zum leitend Schalten des ersten Schalters bei einem Bremsvorgang abhängig von verschiedenen Parametern, wie beispielsweise der Drehzahl des Universalmotors, der Temperatur des Universalmotors, einer gewünschten Bremszeit und/oder einer gewünschten Schonung der Bürsten des Kollektors. Zudem variiert auch der Zeitverzug zwischen dem Schalten des ersten Schalters zum kurzzeitigen Einstellen eines Motorbetriebes und dem Schalten des zweiten Schalters zum Einstellen des Bremsbetriebes.

Der Zeitverzug zwischen dem Schalten des ersten Schalters und dem Schalten des zweiten Schalters kann beispielsweise im Bereich zwischen einer Mikrosekunde und einer Millisekunde. Beispielsweise kann der Zeitverzug zwischen 1 Mikrosekunde und 5 Mikrosekunden oder zwischen 5 Mikrosekunden und 20 Mikrosekunden oder zwischen 20 Mikrosekunde und 50 Mikrosekunden oder zwischen 50 Mikrosekunden und 100 Mikrosekunden liegen. Weiterhin kann der Zeitverzug zwischen 100 Mikrosekunden und 300 Mikrosekunden liegen. Abhängig von der Realisierung können auch kürzere Zeiten oder längere Zeiten für den Zeitverzug verwendet werden.

In einer einfachen Ausführungsform kann der Zeitverzug zwischen der Ansteuerung des ersten Schalters und der Ansteuerung des zweiten Schalters zum kurzzeitigen Aktivieren des Motorbetriebes und anschließendem Aktivieren des Bremsbetriebes für den gesamten Bremsvorgang konstant sein.

In einer weiteren Ausführungsform kann der Zeitverzug zwischen dem Schalten des ersten Schalters in einen kurzzeitigen Motorbetrieb und dem Schalten des zweiten Schalters zum Aktivieren des Bremsbetriebes bei einem Bremsvorgang von Parametern des Universalmotors wie z. B. der Temperatur, der Drehzahl, den elektrischen Eigenschaften wie z. B. dem Widerstand R und der Induktivität L und der Netzspannung abhängen.

Beispielsweise kann der Zeitverzug abhängig von der Netzspannung zum Zeitpunkt des Schaltens des ersten Schalters und/oder abhängig von der Drehzahl des Universalmotors und/oder abhängig von der Temperatur des Universalmotors sein. Dazu sind vorzugsweise experimentell ermittelte Tabellen oder Kennlinien in einem Datenspeicher abgelegt, auf die die Steuerelektronik zugreift.

Die Temperatur des Universalmotors und die Drehzahl des Universalmotors kann mit den entsprechenden Sensoren 35 erfasst oder mit Hilfe von Betriebsparametern, wie z. B. dem Strom und der Spannung abgeschätzt bzw. berechnet werden.

Abhängig von der gewählten Ausführungsform kann der Universalmotor während jeder Halbwelle der Netzspannung einem Bremsbetriebsbetrieb mit kurzzeitig vorausgehendem Motorbetrieb unterworfen werden, wie anhand von Figur 6 erläutert. Abhängig von der gewählten Ausführungsform kann dabei der Motorbetrieb vor dem tatsächlichen Bremsbetrieb beispielsweise bei nur einem Teil der Halbwellen durchgeführt werden.

Die Steuerelektronik ist in Form eines Controllers mit einem entsprechenden Softwareprogramm ausgebildet, um die Ansteuerung des ersten und des zweien Schalters durchzuführen. Dazu ist weiterhin ein Speicher vorgesehen, in dem das Steuerprogramm und Steuerdaten wie z. B. Tabellen für den Phasenanschnitt der Schalter, das heißt die Phasenwinkel für das Ein- und Ausschalten des ersten Schalters und das Ein- und Ausschalten des zweiten Schalters gemäß dem Bremsbetrieb der Figur 6 abgelegt sind. Insbesondere sind im Speicher Tabellen und/oder Kennlinien für die Phasenwinkel abgelegt, bei denen der erste und/oder der zweite Schalter ein- bzw. ausgeschaltet werden. Die Tabellen und Kennlinien können dabei von Parametern des Universalmotors und/oder der Netzspannung abhängen. Insbesondere kann der Zeitverzug für die Ansteuerung des zweiten Schalters nach dem ersten Schalter während des Bremsbetriebes von der Netzspannung zum Zeitpunkt des Schaltens des ersten Schalters und/oder abhängig von der Drehzahl des Universalmotors und/oder von der Temperatur des Universalmotors abhängen. Dazu sind entsprechende Tabellen und/oder Kennlinien abgelegt, die beispielweise experimentell ermittelt wurden.

Weiterhin können Daten abgespeichert werden, die eine Veränderung der Phasenanschnittwinkel von Halbwelle zu Halbwelle festlegen. Beispielsweise kann die Veränderung der Phasenwinkel von einer Halbwelle zur nächsten Halbwelle für das leitend Schalten des ersten Schalters und/oder für das leitend Schalten des zweiten Schalters auf einen Höchstwert von beispielsweise einem Prozent begrenzt sein.

Aus den Figuren 3 bis 5 ist ersichtlich, dass am Ende des Bremsbetriebes Pakete von Halbwellen verschiedener Spannungspolarität aufeinander folgen. Somit werden für festgelegte Zeiträume oder eine festgelegte Anzahl von Halbwellen beispielsweise nur positive Halbwellen des Spannungsnetzes verwendet, um eine Bremsung mit einem Motorbetrieb und einem Bremsbetrieb durchzuführen. Anschließend wird ein Paket von negativen Halbwellen des Spannungsnetzes verwendet, um eine Bremsung des Universalmotors mit einem kurzen Motorbetrieb und einem anschließenden Bremsbetrieb durchzuführen, wie anhand von Figur 6 erläutert ist.

## Patentansprüche

1. Elektrodynamische Bremseinrichtung für einen Universalmotor mit einer Einrichtung zum Umschalten von einem Motorbetrieb in einen Bremsbetrieb,
- wobei während des Bremsbetriebes eine Feldwicklung (3) des Universalmotors über einen ersten und einen zweiten Schalter (1,1') aus einem Netz gespeist ist, und ein Anker (2) des Universalmotors über den zweiten Schalter (1') kurzgeschlossen ist,
- und mit einer Steuerelektronik (5), die ausgebildet ist, um während des Bremsbetriebes vorzugsweise innerhalb einer jeden Halbwelle der Netzspannung kurzzeitig einen Motorbetrieb und nachfolgend einen Bremsbetrieb vorzugeben , wobei zuerst der erste Schalter (1) leitend geschalten wird und mit einem vorbestimmten Zeitverzug der zweite Schalter (1') leitend geschalten wird.

2. Elektrodynamische Bremseinrichtung nach Anspruch 1, wobei der Zeitverzug für eine Ansteuerung des zweiten Schalters (1') derart ausgelegt ist,
dass der vorgelegte Motorbetrieb innerhalb einer Halbwelle der Netzspannung eine Reduzierung eines Bürstenfeuers am Kollektor des Universalmotors bewirkt.

3. Elektrodynamische Bremseinrichtung nach Anspruch 1 oder 2,
**dadurch gekennzeichnet, dass** der Zeitverzug zwischen 1 µs und 1 ms liegt.

4. Elektrodynamische Bremseinrichtung nach Anspruch 1 bis 3,
**dadurch gekennzeichnet, dass** der Zeitverzug für die Ansteuerung des zweiten Schalters (1') nach dem ersten Schalter während eines Bremsbetriebes konstant ist.

5. Elektrodynamische Bremseinrichtung nach Anspruch 1 bis 3,
**dadurch gekennzeichnet, dass** der Zeitverzug für die Ansteuerung des zweiten Schalters (1') nach dem ersten Schalter während des Bremsbetriebes von Parametern des Universalmotors und der Netzspannung abhängen.

6. Elektrodynamische Bremseinrichtung nach Anspruch 5,
**dadurch gekennzeichnet, dass** der Zeitverzug für die Ansteuerung des zweiten Schalters (1') nach dem ersten Schalter während des Bremsbetriebes abhängig von einer Netzspannung zum Zeitpunkt des Schaltens des ersten Schalters und/oder abhängig von einer von einer Drehzahl des Universalmotors ist und/oder abhängig von einer Temperatur des Universalmotors ist.

7. Elektrodynamische Bremseinrichtung nach einem der Ansprüche 1 bis 3, 5 oder 6,
**dadurch gekennzeichnet, dass** der Zeitverzug für die Ansteuerung des zweiten Schalters (1') am Anfang des Bremsbetriebes einen Wert aufweist, wobei der Wert im weiteren Verlauf des Bremsbetriebes abnimmt und insbesondere am Ende des Bremsbetriebes aufgehoben ist oder insbesondere vor dem ersten Schalter (1) liegt.

8. Elektrodynamische Bremseinrichtung nach einem der Ansprüche 1 bis 7,
**dadurch gekennzeichnet, dass** der Zeitverzug für die Ansteuerung des zweiten Schalters (1') derart ist, dass eine Stromwendung unter Bürsten am Kollektor des Universalmotors während der Einleitung des Bremsbetriebes innerhalb wenigstens eines Teils der Halbwellen von einer ablaufenden Kante der Bürsten hin zu einer auflaufenden Kante verlegt ist, und der Anker während des Bremsbetriebes nicht angetrieben ist.

9. Elektrodynamische Bremseinrichtung nach einem der Ansprüche 1 bis 8,
**dadurch gekennzeichnet, dass** die Steuerelektronik ausgebildet ist, um den Bremsbetrieb ungeregelt oder geregelt durchzuführen.

10. Elektrodynamische Bremseinrichtung nach einem der Ansprüche 1 bis 9,
**dadurch gekennzeichnet, dass** die Steuerelektronik (5) auf eine Tabelle zugreift, in der Phasenanschnittwinkel zur Ansteuerung des ersten und/oder des zweiten Schalters abgelegt sind, wobei vorzugsweise wenigstens eine Phasenanschnittwinkelkurve abgelegt ist.

11. Elektrodynamische Bremseinrichtung nach einem der Ansprüche 1 bis 10,
**dadurch gekennzeichnet, dass** während des Bremsbetriebes der zweite Schalter (1') parallel zum Anker (2) und in Reihe mit der Feldwicklung (3) und in Reihe mit dem ersten Schalter (1) geschaltet ist, wobei dem zweiten Schalter (1') ein Umschaltglied (S) vorzugsweise mit einem Erkennungskontakt (f) vorgeschaltet ist.

12. Elektrodynamische Bremseinrichtung nach Anspruch 11,
**dadurch gekennzeichnet, dass** das Umschaltglied (S) als Signalgeberschaltglied (S') der Steuerelektronik (5) unmittelbar zugeordnet ist, und ein erster Schalter (1) in einem ersten Netzanschluss (a) und ein dritter Schalter (1") in einem zweiten Netzanschluss (b) angeordnet ist.

13. Verfahren zum Bremsen eines Universalmotors mit einer Einrichtung zum Umschalten des Universalmotors von einem Motorbetrieb in einen Bremsbetrieb,
- wobei während des Bremsbetriebes eine Feldwicklung (3) des Universalmotors über einen ersten und einen zweiten Schalter (1,1') aus einer Netzspannung gespeist wird, und ein Anker (2) des Universalmotors über den zweiten Schalter (1') kurzgeschlossen ist,
- wobei während des Bremsbetriebes vorzugsweise innerhalb einer jeden Halbwelle der Netzspannung kurzzeitig ein Motorbetrieb des Universalmotors durch Schalten des ersten Schalters eingestellt wird, und wobei mit einem Zeitverzug nachfolgend ein Bremsbetrieb durch Schalten des zweiten Schalters (1') eingestellt wird.

14. Verfahren nach Anspruch 13, wobei der Zeitverzug zwischen dem Schalten des ersten Schalters für den Motorbetrieb und das Schalten des zweiten Schalters für den Bremsbetrieb zwischen 1 µs und 1 ms liegt.

15. Verfahren nach Anspruch 13 oder 14, wobei der Zeitverzug für die Ansteuerung des zweiten Schalters (1') nach dem ersten Schalter während des Bremsbetriebes abhängig von einer Netzspannung zum Zeitpunkt des Schaltens des ersten Schalters und/oder abhängig von einer von einer Drehzahl des Universalmotors ist und/oder abhängig von einer Temperatur des Universalmotors ist.

## Claims

1. Electrodynamic braking device for a universal motor, having a device for switching from a motor mode into a braking mode,
- wherein during the braking mode a field winding (3) of the universal motor is fed from a power grid via a first and a second switch (1, 1'), and an armature (2) of the universal motor is short-circuited via the second switch (1'),
- and having control electronics (5) which are designed to briefly predefine a motor mode during the braking mode, preferably within each half cycle of the power grid voltage, and subsequently to predefine a braking mode, wherein the first switch (1) is firstly energized and the second switch (1') is energized with a predetermined delay.

2. Electrodynamic braking device according to Claim 1,
wherein the delay for actuating the second switch (1') is configured in such a way that the preceding motor mode within a half cycle of the power grid voltage brings about a reduction in a sparking at the collector of the universal motor.

3. Electrodynamic braking device according to Claim 1 or 2,
**characterized in that** the delay is between 1 µs and 1 ms.

4. Electrodynamic braking device according to Claims 1 to 3,
**characterized in that** the delay for the actuation of the second switch (1') after the first switch is constant during a braking mode.

5. Electrodynamic braking device according to Claims 1 to 3,
**characterized in that** the delay for the actuation of the second switch (1') after the first switch during the braking mode depends on parameters of the universal motor and of the power grid voltage.

6. The electrodynamic braking device according to Claim 5,
**characterized in that** the delay for the actuation of the second switch (1') after the first switch during the braking mode is dependent on a power grid voltage at the time of the switching of the first switch and/or dependent on a rotational speed of the universal motor and/or dependent on a temperature of the universal motor.

7. Electrodynamic braking device according to one of Claims 1 to 3, 5 or 6,
**characterized in that** the delay for the actuation of the second switch (1') at the start of the braking mode has a value, wherein the value decreases in the further course of the braking mode and in particular is eliminated at the end of the braking mode or in particular is located before the first switch (1).

8. Electrodynamic braking device according to one of Claims 1 to 7,
**characterized in that** the delay for the actuation of the second switch (1') is such that commutation under brushes at the collector of the universal motor during the initiation of the braking mode within at least a portion of the half cycles is moved from a trailing edge of the brushes to a leading edge, and the armature is not driven during the braking mode.

9. Electrodynamic braking device according to one of Claims 1 to 8,
**characterized in that** the control electronics are designed to carry out the braking mode in an unregulated or regulated fashion.

10. Electrodynamic braking device according to one of Claims 1 to 9,
**characterized in that** the control electronics (5) access a table in which phase-gating angles for actuating the first and/or the second switch are stored, wherein preferably at least one phase-gating angle curve is stored.

11. Electrodynamic braking device according to one of Claims 1 to 10,
**characterized in that** during the braking mode the second switch (1') is connected parallel to the armature (2) and in series with the field winding (3) and in series with the first switch (1), a switching element (S) being connected upstream of the second switch (1'), preferably with a detection contact (f).

12. Electrodynamic braking device according to Claim 11,
**characterized in that** the switching element (S) is directly assigned as a signal generator switching element (S') to the control electronics (5), and a first switch (1) is arranged in a first power grid connection (a), and a third switch (1") is arranged in a second power grid connection (b).

13. Method for braking a universal motor having a device for switching the universal motor from a motor mode into a braking mode,
- wherein during the braking mode a field winding (3) of the universal motor is fed from a power grid voltage via a first and a second switch (1, 1'), and an armature (2) of the universal motor is short-circuited via the second switch (1'),
- wherein during the braking mode a motor mode of the universal motor is set briefly preferably within each half cycle of the power grid voltage by switching the first switch, and wherein a braking mode is subsequently set with a delay by switching the second switch (1').

14. Method according to Claim 13, wherein the delay between the switching of the first switch for the motor mode and the switching of the second switch for the braking mode is between 1 µs and 1 ms.

15. Method according to Claim 13 or 14, wherein the delay for the actuation of the second switch (1') after the first switch during the braking mode is dependent on a power grid voltage at the time of the switching of the first switch and/or dependent on a rotational speed of the universal motor and/or dependent on a temperature of the universal motor.

## Revendications

1. Dispositif de freinage électrodynamique pour un moteur universel comprenant un dispositif pour permuter d'un régime de moteur en un régime de frein,
- avec lequel, pendant le régime de frein, un enroulement de champ (3) du moteur universel est alimenté depuis un réseau par le biais d'un premier et d'un deuxième commutateur (1, 1') et un induit (2) du moteur universel est court-circuité par le deuxième commutateur (1') ,
- et comprenant une électronique de commande (5) qui est configurée pour, pendant le régime de frein de préférence à l'intérieur de chaque demi-onde de la tension de réseau, prédéfinir pendant une courte durée un régime de moteur et ensuite un régime de frein, le premier commutateur (1) étant rendu passant en premier et le deuxième commutateur (1') étant rendu passant avec un retard prédéfini.

2. Dispositif de freinage électrodynamique selon la revendication 1, avec lequel le retard pour une commande du deuxième commutateur (1') est conçu de telle sorte que le régime de moteur présent en premier à l'intérieur d'une demi-onde de la tension de réseau provoque une réduction des étincelles aux balais au niveau du collecteur du moteur universel.

3. Dispositif de freinage électrodynamique selon la revendication 1 ou 2, **caractérisé en ce que** le retard est compris entre 1 µs et 1 ms.

4. Dispositif de freinage électrodynamique selon les revendications 1 à 3, **caractérisé en ce que** le retard pour la commande du deuxième commutateur (1') après le premier commutateur pendant un régime de frein est constant.

5. Dispositif de freinage électrodynamique selon les revendications 1 à 3, **caractérisé en ce que** le retard pour la commande du deuxième commutateur (1') après le premier commutateur pendant le régime de frein dépend de paramètres du moteur universel et de la tension de réseau.

6. Dispositif de freinage électrodynamique selon la revendication 5, **caractérisé en ce que** le retard pour la commande du deuxième commutateur (1') après le premier commutateur pendant le régime de frein dépend d'une tension de réseau au moment de la commutation du premier commutateur et/ou dépend d'une vitesse de rotation du moteur universel et/ou dépend d'une température du moteur universel.

7. Dispositif de freinage électrodynamique selon l'une des revendications 1 à 3, 5 ou 6, **caractérisé en ce que** le retard pour la commande du deuxième commutateur (1') au début du régime de frein présente une valeur, la valeur diminuant pendant le reste du déroulement du régime de frein et étant augmentée notamment à la fin du régime de frein ou se trouvant notamment avant le premier commutateur (1).

8. Dispositif de freinage électrodynamique selon l'une des revendications 1 à 7, **caractérisé en ce que** le retard pour la commande du deuxième commutateur (1') est tel qu'un basculement du courant sous les balais au niveau du collecteur du moteur universel pendant l'initiation du régime de frein à l'intérieur d'au moins une partie de la demi-onde est décalé d'un front descendant des balais à un front montant, et l'induit n'est pas entraîné pendant le régime de frein.

9. Dispositif de freinage électrodynamique selon l'une des revendications 1 à 8, **caractérisé en ce que** l'électronique de commande est configurée pour exécuter le régime de frein de manière non régulée ou régulée.

10. Dispositif de freinage électrodynamique selon l'une des revendications 1 à 9, **caractérisé en ce que** l'électronique de commande (5) accède à un tableau dans lequel sont enregistrés des angles de flux pour la commande du premier et/ou du deuxième commutateur, de préférence au moins une courbe d'angle de flux étant enregistrée.

11. Dispositif de freinage électrodynamique selon l'une des revendications 1 à 10, **caractérisé en ce que** pendant le régime de frein, le deuxième commutateur (1') est branché en parallèle avec l'induit (2) et en série avec l'enroulement de champ (3) et en série avec le premier commutateur (1), un élément d'inversion (S), de préférence muni d'un contact de détection (f), étant branché en amont du deuxième commutateur (1').

12. Dispositif de freinage électrodynamique selon la revendication 11, **caractérisé en ce que** l'élément d'inversion (S) est associé directement à l'électronique de commande (5) en tant qu'élément de commutateur codeur de signal (S') et un premier commutateur (1) est disposé dans un premier raccordement de réseau (a) et un troisième commutateur (1") dans un deuxième raccordement de réseau (b).

13. Procédé de freinage d'un moteur universel avec un dispositif pour permuter le moteur universel d'un régime de moteur en un régime de frein,
- selon lequel, pendant le régime de frein, un enroulement de champ (3) du moteur universel est alimenté à partir d'une tension de réseau par le biais d'un premier et d'un deuxième commutateur (1, 1') et un induit (2) du moteur universel est court-circuité par le deuxième commutateur (1'),
- selon lequel, pendant le régime de frein, de préférence à l'intérieur de chaque demi-onde de la tension de réseau, un régime de moteur du moteur universel est établi pendant une courte durée en commutant le premier commutateur (1) et selon lequel un régime de frein est ensuite établi avec un retard en commutant le deuxième commutateur (1').

14. Procédé selon la revendication 13, selon lequel le retard entre la commutation du premier commutateur pour le régime de moteur et la commutation du deuxième commutateur pour le régime de frein est compris entre 1 µs et 1 ms.

15. Procédé selon la revendication 13 ou 14, selon lequel le retard pour la commande du deuxième commutateur (1') après le premier commutateur pendant le régime de frein dépend d'une tension de réseau au moment de la commutation du premier commutateur et/ou dépend d'une vitesse de rotation du moteur universel et/ou dépend d'une température du moteur universel.
